Europäisches Patentamt

European Patent Office

Office européen des brevets

(11) Veröffentlichungsnummer: **0 570 693 A2**

# (12) EUROPÄISCHE PATENTANMELDUNG

(21) Anmeldenummer: **93105609.7**

(51) Int. Cl.5: **C01G 49/06**

(22) Anmeldetag: **05.04.93**

(30) Priorität: **21.04.92 DE 4213061**

(43) Veröffentlichungstag der Anmeldung:
**24.11.93 Patentblatt 93/47**

(84) Benannte Vertragsstaaten:
**DE FR GB**

(71) Anmelder: **BASF Magnetics GmbH**
**Dynamostrasse 3**
**W-68165 Mannheim(DE)**

(72) Erfinder: **Vaeth, Guenter**
**Woogstrasse 35**
**W-6703 Limburgerhof(DE)**
Erfinder: **Feser, Rainer, Dr.**
**Colgensteiner Weg 25**
**W-6718 Gruenstadt(DE)**
Erfinder: **Loeser, Werner, Dr.**
**Klagenfurter Strasse 16**
**W-6700 Ludwigshafen(DE)**
Erfinder: **Ohlinger, Manfred, Dr.**
**Anselm-Feuerbach-Strasse 13**
**W-6710 Frankenthal(DE)**

(74) Vertreter: **Langfinger, Klaus-Dieter, Dr. et al**
**BASF Aktiengesellschaft,**
**Patentabteilung ZDX - C 6**
**D-67056 Ludwigshafen (DE)**

(54) **Verfahren zur Herstellung von nadelförmigem Gamma-Eisen(III)oxid.**

(57) Die Erfindung betrifft ein Verfahren zur Herstellung von nadelförmigem, mit Zinndioxid ausgerüstetem, ferrimagnetischem Gamma-Eisen(III)oxid, ausgehend von einem im wesentlich aus Lepidokrokit bestehenden Eisen(III)oxidhydroxid, wobei der für die Herstellung des Eisen(III)oxidhydroxids eingesetzten Eisen(II)salzlösung lösliche Aluminium-Ionen in einer Menge von 500 bis 7000 ppm, bezogen auf den Eisenanteil der Lösung, zugesetzt werden.

EP 0 570 693 A2

Die Erfindung betrifft ein Verfahren zur Herstellung von nadelförmigem Gamma-Eisen(III)oxid, das mit Zinndioxid ausgerüstet und mit Aluminium-Ionen dotiert ist.

Nadelförmige ferrimagnetische Eisenoxide werden seit langem in großem Umfang bei der Herstellung magnetischer Aufzeichnungsträger eingesetzt. Die unterschiedlichen Anforderungen an die magnetischen Aufzeichnungsträger bedingen je nach ihrem Anwendungsbereich Eisenoxide mit jeweils speziellen ferrimagnetischen Eigenschaften. Zur Herstellung der zumeist eingesetzten Gamma-Eisen(III)oxide sind eine Vielzahl von Verfahren bekannt geworden.

Dieses Material wird, ausgehend von Eisenoxidhydroxid, durch Entwässern, Reduktion zu Magnetit und anschließende Oxidation zum Gamma-Eisen(III)oxid erhalten, wobei gegebenenfalls zwischen den einzelnen Verfahrensschritten noch Temperbehandlungen eine wesentliche Rolle spielen. Eine Fertigung von Gamma-Eisen(III)oxid ausgehend von Lepidokrokit hat den Vorteil, daß die bei Lepidokrokit besonders ausgeprägte Nadelstruktur sich positiv auf die magnetische Orientierbarkeit der letztlich vorhandenen Gamma-Eisen(III)-oxide in der hergestellten Magnetdispersion auswirkt, wodurch sich dann schließlich die remanente Magnetisierung in der Magnetschicht verbessern läßt. Wird jedoch im Rahmen der Herstellung des Gamma-Eisen(III)oxids der Lepidokrokit bei erhöhter Temperatur zum Alpha-Eisen(III)oxid entwässert und daran anschließend in Magnetit überführt und schließlich mit Luftsauerstoff zum Gamma-Eisen-(III)oxid oxidiert, so wird mit zunehmender Entwässerungs- oder Reduktionstemperatur ein Abfall der Koerzitivfeldstärke im Endprodukt beobachtet (Bull. Chem. Soc. Japan 50 (6) 1977, 1635). Dieser Abfall der Koerzitivfeldstärke entspricht dem Abfall der spezifischen Oberfläche. Zur Begrenzung dieses Abfalls der Koerzitivfeldstärke und der spezifischen Oberfläche wurde bereits vorgeschlagen, die Reduktion in Gegenwart zersetzlicher organischer Verbindungen durchzuführen (US-A 2 900 236, DE-A 28 05 405 und DE-A 28 05 621). Durch die Reduktion mit organischen Verbindungen wird der Sinterprozeß, der einzelnen Teilchen eingeschränkt. DE-A 32 04 547 beschreibt die Reduktion von synthetisch hergestelltem, mit Zinndioxid ausgerüstetem Lepidokrokit mit zersetzlichen organischen Verbindungen entweder in einem Inertgasstrom oder einem Inertgas/Wasserstoffstrom bei 350 bis 550°C zum Magnetit und die Oxidation des so hergestellten Magnetits zum Gamma-Eisen-(III)oxid durch Überleiten von sauerstoffhaltigen Gasen bei Temperaturen zwischen 200 und 450°C. Nach letztgenanntem Verfahren werden bei entsprechender Zinndioxid-Dotierung Gamma-Eisen-(III)oxide mit einer Koerzitivfeldstärke von 22 bis 31 kA/m bei gutem Formerhalt gefunden. Bisher war es jedoch schwierig, Gamma-Eisen(III)oxide unterschiedlicher Koerzitivfeldstärke ohne Beeinflussung der spezifischen Oberfläche und der spezifischen Remanenz herzustellen.

Der Erfindung lag somit die Aufgabe zugrunde, nadelförmige, ferrimagnetische Gamma-Eisen(III)-oxide bereitzustellen, deren Koerzitivfeldstärke entsprechend dem Anwendungszweck zwischen 22 und 31 kA/m eingestellt werden kann, ohne daß die spezifische Oberfläche und spezifische Remanenz wesentlich beeinflußt werden.

Es wurde nun gefunden, daß sich die Aufgabe mit einem Verfahren zur Herstellung von nadelförmigem ferrimagnetischem Gamma-Eisen(III)oxid aus einem, im wesentlichen aus Lepidokrokit bestehenden Eisen(III)oxidhydroxid, erhalten durch Zugabe von Alkalien zu einer wäßrigen Eisen (II) Salzlösung unter gleichzeitiger Oxidation mittels Einheiten von Luft in die wäßrige Suspension, Ausrüsten der Eisen(III)oxidhydroxidteilchen mit Zinndioxid, Reduktion des ausgerüsteten Eisen(III)-oxidhydroxids bei 280 bis 500°C zum Magnetit und anschließende Oxidation des Magnetits mit sauerstoffhaltigen Gasen bei 200 bis 380°C zum Gamma-Eisen(III)oxid, lösen läßt, wenn der eingesetzten Eisen (II) salzlösung Aluminium-Ionen in einer Menge von 500 bis 7000 ppm, bezogen auf den Eisen(II)ionen-Anteil der Lösung, zugesetzt werden.

Das in dem erfindungsgemäßen Verfahren eingesetzte, im wesentlichen aus Lepidokrokit bestehende Eisen(III)oxidhydroxid wird aus Eisen(II)-salzlösungen mit Alkalien unter gleichzeitiger Oxidation mit Luft wie z.B. in der DE-B 10 61 760 angegeben, hergestellt. Dabei wird der Eisen(II)-salzlösung der zur Einstellung der Koerzitivfeldstärke beim Endprodukt Gamma-Eisen(III)oxid benötigte Aluminium-Ionen-Anteil in Form löslicher Aluminiumsalze zugesetzt. Als besonders zweckmäßig hat sich erwiesen, aus einer wäßrigen Eisen(II)-chloridlösung mittels Alkalien, wie z.B. Alkalihydroxid oder Ammoniak, bei Temperaturen zwischen 10 und 36°C und kräftigem Rühren zur Erzeugung feiner Luftblasen, Eisen(III)oxidhydroxidkeime bis zu einer Menge von 25 bis 60 mol-% des eingesetzten Eisens zu bilden aus denen dann bei einer Temperatur zwischen 20 und 70°C bei einem durch einen weiteren Zusatz von Alkalien eingestellten pH-Wert von 4,0 bis 5,8 unter intensiver Luftverteilung durch Aufwachsen das Endprodukt entsteht. Während oder am Ende der so gestalteten Aufwachsreaktion wird eine hydrolisierbare Zinnverbindung, wie z.B. Zinn (II) chlorid, auf das in Bildung begriffene oder bereits entstandene Eisen-(III)oxidhydroxid niedergeschlagen. Am Ende der Eisen(III)oxidhydroxid-Herstellung, erkennbar an einem Eisen(II)-Gehalt von < 0,5 %, wird die Suspension noch mit Alkalihydroxid oder Ammoniak auf einen pH-Wert von 8 ± 0,5 eingestellt und etwa 30 min gerührt. Anschließend erfolgt entweder die Abtrennung des so hergestellten, im wesentlichen aus Lepidokrokit bestehenden Eisen (III) oxidhydroxids vom Filtrat oder es schließt sich noch eine Ausrüstung mit organischen, in Gegenwart von Eisenoxid zersetzlichen Verbindungen, wie z.B. Olivenöl, Ricinusöl, sonstige flüssige Fettsäureester oder deren Gemische an. Die Zudosierung dieser organischen Verbindungen erfolgt in einer Menge von 0,7 bis 2,0 Gew.-%, berechnet als Kohlenstoffanteil der jeweiligen organischen Verbindung bezogen auf die Menge Eisen(III)oxidhydroxid. Um eine gleichmäßige Verteilung der organischen Verbindung auf den Lepidokrokitteilchen zu erzielen, muß eine gute Durchmischung der Eisenoxidhydroxidsuspension erfolgen. Danach wird das Eisen(III)-oxidhydroxid abfiltriert und nach Entfernen des restlichen Salzanteils bei 160 bis 190°C getrocknet. Das resultierende Material weist Teilchen mit einer mittleren Teilchenlänge von 0,3 bis 0,8 $\mu$m mit einem Längen- zu Dickenverhältnis von mehr als 10 und einer Teilchenoberfläche SSA, bestimmt als die spezifische Oberfläche gemäß DIN 66 132 nach dem Einpunkt-Differenzverfahren nach Haul-Dümbgen, von 25 bis 50 $m^2$/g auf. Die Dotierung mit Aluminium-Ionen beträgt 500 bis 7000 ppm, bezogen auf den Eisenanteil.

Das auf diese Weise hergestellte Material wird nun bei 280 bis 550°C zum Magnetit reduziert. Hierzu wird das Eisen(III)oxidhydroxid entweder in einem Wasserstoffstrom oder in einem Inertgas-Wasserstoff-Gemisch, wobei das Inertgas üblicherweise Stickstoff ist, 20 bis 100 min lang erhitzt. Der nach dieser Reduktion zur Reaktion erhaltene modifizierte Magnetit wird anschließend durch Überleiten von sauerstoffhaltigem Gas bei Temperaturen zwischen 200 und 380°C zum entsprechend modifizierten Gamma-Eisen(III)oxid oxidiert.

Ein derart hergestelltes Gamma-Eisen(III)oxid zeichnet sich durch eine aufgrund der entsprechenden jeweiligen Aluminium-Dotierung definierten Koerzitivfeldstärke zwischen 22 und 31 kA/m aus, während spezifische Oberfläche und spezifische Remanenz durch die Aluminium-Dotierung nicht oder nur unwesentlich beeinflußt werden.

Ein derart charakterisiertes Gamma-Eisen(III)-oxid eignet sich in hervorragender Weise zur Herstellung von magnetischen Aufzeichnungsträgern. Hierzu werden diese Gamma-Eisen(III)oxide in polymeren Bindemitteln dispergiert. Als Bindemittel eignen sich die für diesen Zweck bekannten Verbindungen, wie Polyamide, Polyurethane, Mischungen von Polyisocyanaten und höhermolekularen Polyhydroxylverbindungen, Vinylchlorid-Copolymerisate, wie Vinylester von Monocarbonsäuren, Ester von aliphatischen Alkoholen und ungesättigten Carbonsäuren, wie Acrylsäure, Methacrylsäure oder Maleinsäure, oder diesen Carbonsäuren selbst, sowie hydroxylgruppenhaltige Vinylchlorid-Copolymerisate allein oder in Abmischungen. Die Magnetschicht kann zusätzlich noch mit Polyisocyanaten vernetzt werden. Zur Dispergierung der magnetischen Materialien in der Bindemittellösung werden zweckmäßigerweise übliche Dispergierhilfsmittel, wie beispielsweise Salze von Fettsäuren, Sojalecithin oder sonstige geeignete Stoffe in Mengen von 0,5 bis 6 Gew.-%, bezogen auf die Menge an magnetischem Material, zugegeben. Außerdem sind Zusätze wie Ester, Carbonsäuren oder Siliconöle in Mengen von 0,5 bis 10 Gew.-% zur Verringerung des Reibungskoeffizienten der Magnetschicht üblich. Als weitere Zusatzstoffe können der Dispersion auch Füllstoffe, wie Ruß, Graphit und/oder nicht magnetisierbare Pulver auf Silicatbasis in bekannter Weise zugesetzt werden. Nach dem Dispergieren erfolgt das Aufbringen der Dispersion mit bekannten Beschichtungseinrichtungen auf übliche Polyethylenterephthalatfolien, wobei ein richtendes Magnetfeld zur Erzielung einer magnetischen Vorzugsrichtung angewendet wird. Nach dem Auftragen und Trocknen der Magnetschicht kann diese mit Vorteil an der Oberfläche vergütet bzw. geglättet werden. Anschließend wird die beschichtete Folie in die gewünschte Bandbreite geschnitten.

Die Erfindung sei anhand folgender Beispiele und gegenüber dem Stand der Technik durch Vergleichsversuche näher erläutert. Die magnetischen Pulverwerte wurden durch Messung einer auf ein Stopfgewicht von D = 1,2 $g/cm^3$ gebrachten Oxidprobe mit einem konventionellen Schwingmagnetometer bei 160 kA/m Meßfeldstärke bestimmt. Die Koerzitivfeldstärke ($H_c$) wird in [kA/m], die spezifische Magnetisierung ($M_m/\rho$) und die spezifische Remanenz ($M_r/\rho$) werden in [$nTm^3$/g] angegeben. Die spezifische Oberfläche (SSA) der Pulver in [$m^2$/g] wird gemäß DIN 66 132 bestimmt. Bei den Magnetschichten wird die Koerzitivfeldstärke ($H_c$), die remanente Magnetisierung ($M_r$) in [mT] und der Richtfaktor RF, d.h. das Verhältnis der remanenten Magnetisierung entlang der Vorzugsrichtung zu der quer dazu, angegeben.

Beispiel 1

Zu einer Mischung aus 24 l Wasser und 8 l einer 30 %igen Fe(II)chloridlösung mit einem löslichen Al-Anteil aus $AlCl_3$ entsprechend 500 ppm Al, bezogen auf Fe, wurden bei 20°C 65 l einer 15 %igen Natronlauge gegeben. In diese Lösung wurden bei 20 bis 24°C 500 l Luft/Std. eingeleitet. Nach etwa 4 Stunden war die Keimphase beendet, was sich durch den Abfall des pH-Wertes von 7 auf unter 3 anzeigte. Jetzt wurde die Suspension auf 30°C erhitzt und unter weiterem Einleiten von Luft durch Zugabe von Natronlauge ein pH-Wert zwischen 4,5 und 5,2 eingehalten. Am Ende dieser sogenannten Aufwachsphase, wenn keine Natronlauge mehr verbraucht wurde und der pH-Wert konstant blieb, wurden 11,7 g $SnCl_2 \cdot 2H_2O$, in 100 ml Wasser gelöst, zugegeben (0,27 % Sn, bezogen auf das Endprodukt). Danach wurde die Suspension durch weitere Zufuhr von Natronlaugelösung auf einen pH-Wert von 8,0 eingestellt. Nach weiterem 30 minütigem Rühren wurden 117 g Olivenöl zudosiert und noch 2 Stunden nachgerührt. Sodann wurde der pH-Wert von 8,0 nochmals kontrolliert, wenn erforderlich nochmals Natronlaugelösung zugegeben, die Suspension filtriert und der Filterrückstand gewaschen. Die Trocknung des so hergestellten Lepidokrokits erfolgte bei 170°C. Die Lepidokrokitprobe wurde gemahlen und dann in einem Drehrohrofen im Wasserstoff-Strom bei 490°C innerhalb von 50 Minuten zu Magnetit reduziert und der Magnetit anschließend bei 250°C mit Luft zu Gamma-Eisen(III)oxid oxidiert. Die Meßergebnisse sind in der Tabelle angegeben.

Mit dem so erhaltenen Gamma-Eisen(III)oxid wurde eine Magnetdispersion und daraus ein Magnetogrammträger hergestellt. Zur Fertigung der Dispersion wurde eine Kugelmühle mit 5000 Teilen Stahlkugeln, mit einem Durchmesser von 6 mm, gefüllt und anschließend mit 400 Teilen des Magnetpigments, 250 Teilen eines Gemisches aus Tetrahydrofuran und 1,4-Dioxan im Gewichtsverhältnis 1:1, 5 Teilen Lecithin und 100 Teilen einer Bindemittelmischung aus 70 Teilen eines thermoplastischen Polyurethans und 30 Teilen eines Phenoxiharzes, gelöst in je 200 Teilen Tetrahydrofuran und 1,4-Dioxan, sowie 2 Teilen Siliconöls und eines leitfähigen Rußes 72 Stunden dispergiert. Die so erhaltene Dispersion wurde durch einen Filter mit 5 $\mu$m Porenweite unter Druck filtriert. Mit einem Linealgießer wurde eine 12 $\mu$m dicke Polyethylenterephthalatfolie mit der Magnetdispersion beschichtet und nach Trocknung bei 70 bis 100°C zwischen 2 beheizten Walzen geglättet, so daß danach eine Schichtdicke von 4,5 $\mu$m resultierte. Die magnetischen Eigenschaften der beschichteten Folie sind in der Tabelle angegeben.

Beispiel 2

Es wurde wie in Beispiel 1 beschrieben verfahren, jedoch enthielt die Fe(II)chloridlösung einen löslichen Al-Anteil entsprechend 1130 ppm Al. Die Meßergebnisse sind in der Tabelle angegeben.

Beispiel 3

Es wurde wie in Beispiel 1 beschrieben verfahren, jedoch enthielt die Fe(II)chloridlösung einen löslichen Al-Anteil entsprechend 3250 ppm Al. Die Meßergebnisse sind in der Tabelle angegeben.

Beispiel 4

Es wurde wie in Beispiel 1 beschrieben verfahren, jedoch enthielt die Fe(II)chloridlösung einen löslichen Al-Anteil entsprechend 6970 ppm Al. Die Meßergebnisse sind in der Tabelle angegeben.

Vergleichsversuch 1

Es wurde wie in Beispiel 1 beschrieben verfahren. Jedoch unterblieb die Zugabe eines löslichen Al-Anteils. Die Meßergebnisse sind in der Tabelle angegeben.

Beispiel 5

Es wurde wie in Beispiel 3 beschrieben verfahren, jedoch ohne organische Ausrüstung des Lepidokrokits in der Suspension. Mit dem nach Reduktion und Oxidation, wie in Beispiel 1 beschrieben, erhaltenen Gamma-Eisen(III)oxid wurde eine Magnetdispersion wie beschrieben hergestellt. Die Beschichtung erfolgte jedoch auf eine 20 $\mu$m dicke Polyethylenterephthalatfolie mit einer Magnetschichtdicke nach Trocknen und Glätten von 9 $\mu$m. Die Meßergebnisse sind in der Tabelle angegeben.

Vergleichsversuch 2

Es wurde wie in Beispiel 5 beschrieben verfahren. Jedoch unterblieb die Zugabe eines löslichen Al-Anteils. Die Meßergebnisse sind in der Tabelle angegeben.

Tabelle

| | Pulverdaten | | | | Banddaten | | | |
|---|---|---|---|---|---|---|---|---|
| | $H_c$ [kA/m] | $M_r/\varrho$ [nTm³/g] | $M_m/\varrho$ [nTm³/g] | $SN_2$ [m²/g] | $H_c$ [kA/m] | $M_r$ [mT] | $M_m$ [mT] | RF |
| Beispiel 1 | 30.4 | 39.8 | 89.5 | 19.1 | 30.9 | 161 | 188 | 3.0 |
| Beispiel 2 | 29.7 | 39.5 | 90.2 | 18.8 | 29.9 | 159 | 187 | 2.9 |
| Beispiel 3 | 27.1 | 40.1 | 90.4 | 19.0 | 27.5 | 163 | 189 | 2.9 |
| Beispiel 4 | 22.6 | 38.9 | 89.3 | 18.4 | 23.4 | 158 | 185 | 3.7 |
| Vergleichsversuch 1 | 31.0 | 39.7 | 89.8 | 19.2 | 31.5 | 165 | 190 | 2.8 |
| Beispiel 5 | 26.2 | 42.5 | 93.4 | 14.8 | 25.0 | 115 | 150 | 1.9 |
| Vergleichsversuch 2 | 23.1 | 41.9 | 92.8 | 14.5 | 22.8 | 118 | 148 | 1.8 |

nem, im wesentlichen aus Lepidokrokit bestehenden Eisen(III)oxidhydroxid, erhalten durch Zugabe von Alkalien zu einer wäßrigen Eisen-(II)salzlösung unter gleichzeitiger Oxidation mittels Einleiten von Luft in die wäßrige Suspension, Ausrüsten der Eisen(III)-oxidhydroxidteilchen mit Zinndioxid, Reduktion des ausgerüsteten Eisen(III)oxidhydroxids bei 280 bis 500°C zum Magnetit und anschließende Oxidation des Magnetits mit sauerstoffhaltigen Gasen bei 200 bis 380°C zum Gamma-Eisen(III)oxid, dadurch gekennzeichnet, daß der eingesetzten Eisen(II)salzlösung Aluminium-Ionen in einer Menge von 500 bis 7000 ppm, bezogen auf den Eisen(II)ionen-Anteil der Lösung, zugesetzt werden.

**Patentansprüche**

1. Verfahren zur Herstellung von nadelförmigem, ferrimagnetischen Gamma-Eisen(III)oxid aus ei-